# EUROPEAN PATENT APPLICATION

(11) **EP 4 761 364 A1**
(43) Date of publication of application: **17.06.2026**
(21) Application number: 24851912.6
(22) Date of filing: 08.08.2024
(51) Int. Cl.: H04W 36/08, H04W 36/38, H04W 72/231, H04W 74/08

(54) **COMMUNICATION DEVICE, BASE STATION, AND COMMUNICATION METHOD**

(30) Priority: 09.08.2023 JP 2023130224
(71) Applicant: DENSO CORPORATION, Kariya-city, Aichi 448-8661 (JP)
(72) Inventor: MAEMOTO, Daiki, Kariya- city, Aichi 4488661 (JP); NAGANO, Tatsuki, Kariya- city, Aichi 4488661 (JP)
(74) Representative: TBK
(86) International application number: PCT/JP2024/028418
(87) International publication number: WO 2025/033495

(57) **Abstract**

A communication apparatus (100) according to an embodiment comprises: a receiver configured to receive configuration information related to Layer 1/Layer 2 triggered mobility (LTM), the configuration information including first information indicating a preamble index used for a random access (RA) procedure from a base station using a radio resource control (RRC) message and receive a cell switch command medium access control (MAC) control element (CE) including information for identifying the configuration information and instructing cell switching from the base station; and a controller configured to perform the RA procedure to a target cell corresponding to the information for identifying the configuration information, in a case where the cell switch command MAC CE is received. When second information indicating the preamble index is included in the cell switch command MAC CE, the controller is configured to perform the RA procedure using the preamble index determined based on the second information.

## Description

### Cross-Reference to Related Application

This application is based on and claims the benefit of priority from Japanese Patent Application No. 2023-130224, filed on August 9, 2023, the entire contents of which are incorporated herein by reference.

### Technical Field

The present disclosure relates to a communication apparatus, a base station, and a communication method.

### Background Art

In a mobile communication system conforming to the technical specification of the 3rd Generation Partnership Project (hereinafter, 3GPP (registered trademark)), which is a standardization project of a mobile communication system, introduction of L1 (Layer 1)/L2 (Layer 2) triggered mobility (L1/L2-Triggered Mobility: LTM) is scheduled (see, for example, Non-Patent Literature 1). In the LTM, a base station transmits a cell switch command for triggering cell switching to a communication apparatus by a medium access control control element (MAC CE) based on an L1 measurement report received from the communication apparatus, thereby switching a serving cell of the communication apparatus. The communication apparatus can dynamically perform the cell switching in a case where compared with the cell switching based on a radio resource control (RRC) message so that a mobility delay can be reduced.

In the LTM, for example, early synchronization in which the communication apparatus performs synchronization with a candidate cell before receiving a cell switch command, LTM execution in which the communication apparatus performs cell switching according to a cell switch command based on the L1 measurement report, and the like can be performed.

In the LTM execution, it is agreed that both a method of performing a random access procedure between the communication apparatus and the base station (hereinafter, appropriately referred to as RACH-base LTM) and a method of performing an uplink transmission by the communication apparatus without performing a random access procedure between the communication apparatus and the base station (hereinafter, appropriately referred to as a RACH-less LTM) are supported.

### Citation List

### Non Patent Literature

Non Patent Literature 1: 3GPP TSG-RAN WG2 Meeting #121, R2-2302039, "38.300 running CR for introduction of NR further mobility enhancements"

### Summary of Invention

A communication apparatus according to a first aspect comprises: a receiver configured to receive configuration information related to Layer 1/Layer 2 triggered mobility (LTM), the configuration information including first information indicating a preamble index used for a random access (RA) procedure from a base station using a radio resource control (RRC) message and receive a cell switch command medium access control (MAC) control element (CE) including information for identifying the configuration information and instructing cell switching from the base station; and a controller configured to perform the RA procedure to a target cell corresponding to the information for identifying the configuration information, in a case where the cell switch command MAC CE is received. When second information indicating the preamble index is included in the cell switch command MAC CE, the controller is configured to perform the RA procedure using the preamble index determined based on the second information.

A base station according to a second aspect comprises: a transmitter configured to transmit configuration information related to Layer 1/Layer 2 triggered mobility (LTM), the configuration information including first information indicating a preamble index used in a random access (RA) procedure, to a communication apparatus by using a radio resource control (RRC) message and transmit, to the communication apparatus, cell switch command medium access control (MAC) control element (CE) including information for identifying the configuration information and instructing cell switching; and a controller configured to include second information indicating the preamble index in the cell switch command MAC CE.

A communication method according to a third aspect is a communication method performed by a communication apparatus. The communication method comprises the steps of: receiving configuration information related to Layer 1/Layer 2 triggered mobility (LTM), the configuration information including first information indicating a preamble index used for a random access (RA) procedure from a base station using a radio resource control (RRC) message; receiving a cell switch command medium access control (MAC) control element (CE) including information for identifying the configuration information and instructing cell switching from the base station; performing the RA procedure to a target cell corresponding to the information for identifying the configuration information, in a case where the cell switch command MAC CE is received; and performing the RA procedure using the preamble index determined based on second information, in a case where the second information indicating the preamble index is included in the cell switch command MAC CE.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack according to the embodiment.
Fig. 3 is a diagram illustrating an overview of LTM.
Fig. 4 is a diagram illustrating a configuration of a UE according to the embodiment.
Fig. 5 is a diagram illustrating a configuration of a base station according to the embodiment.
Fig. 6 is a sequence diagram illustrating an operation example according to the embodiment.
Fig. 7 is a (first) flowchart illustrating an operation example according to the embodiment.
Fig. 8 is a (second) flowchart illustrating the operation example according to the embodiment.
Fig. 9 is a (third) flowchart illustrating the operation example according to the embodiment.

### Description of Embodiments

A mobile communication system according to an embodiment is described with reference to the drawings. In the description of the drawings, the same or similar parts are denoted by the same or similar reference numerals.

However, in a case where the communication apparatus performs the RACH-base LTM, the RACH resource used in the random access procedure is not defined. Therefore, there is a concern that the communication apparatus cannot appropriately perform the RACH-base LTM, and the cell switching to the target cell fails in the LTM.

Therefore, an object of the present invention is to provide a communication apparatus, a base station, and a communication method capable of appropriately performing the RACH-base LTM.

### (System Configuration)

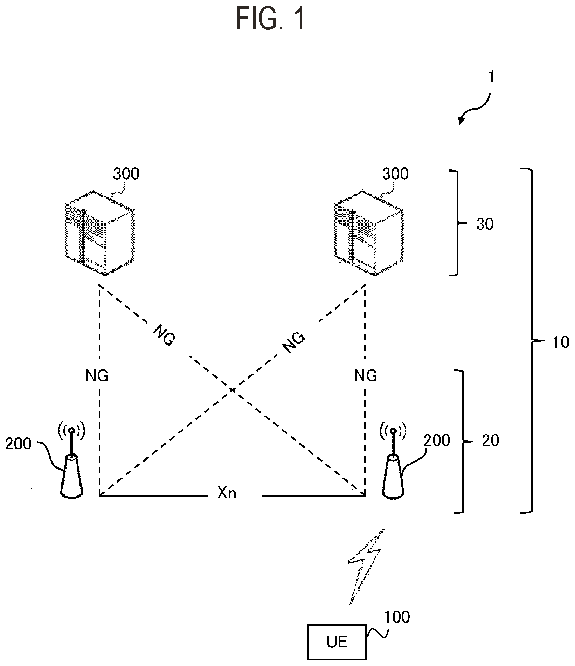

First, a configuration of a mobile communication system 1 according to the present embodiment is described with reference to Fig. 1. The mobile communication system 1 is, for example, a system conforming to a technical specification (TS) of 3GPP. Hereinafter, description is made with an example in which the 5th generation system (5G system) of the 3GPP standard, that is, a mobile communication system based on New Radio (NR radio access) is used as the mobile communication system 1.

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.

The UE 100 is a communication apparatus that performs communication via a base station 200. The UE 100 may be an apparatus used by a user. The UE 100 is, for example, a mobile apparatus such as a mobile phone terminal such as a smartphone, a tablet terminal, a laptop PC, a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. Note that the UE 100 may be referred to as another term such as a terminal, a terminal apparatus, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. In addition, the UE 100 is an example of a terminal, and the terminal may include a factory apparatus or the like.

The NG-RAN 20 includes the plurality of base stations 200. Each base station 200 manages at least one cell. The cell configures a minimum unit of a communication area. One cell belongs to one frequency (carrier frequency). The term "cell" may indicate a radio communication resource and may also indicate a communication object of the UE 100. Each base station 200 can perform radio communication with the UE 100 existing in its own cell. The base station 200 communicates with the UE 100 using a protocol stack of RAN. Details of the protocol stack are described below. Also, one base station 200 is connected to another base station 200 (may be referred to as a neighboring base station) via an Xn interface. The base station 200 communicates with the neighboring base station via the Xn interface. Also, the base station 200 provides NR user plane and control plane protocol terminations toward the UE 100 and is connected to the 5GC 30 via an NG interface. The NR base station 200 may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for U-plane processing. The AMF and the UPF are connected to the base station 200 via the NG interface.

### (Configuration Example of Protocol Stack)

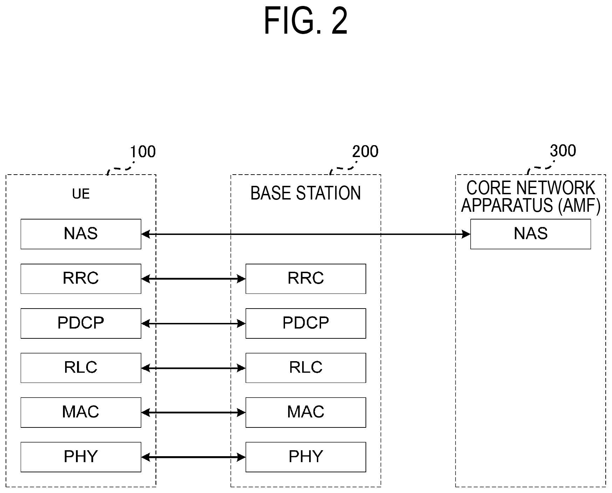

Next, a configuration example of the protocol stack according to the present embodiment is described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs coding/decoding, modulation/demodulation, antenna mapping/demapping, and resource mapping/demapping. Data and control information are transmitted between the PHY layer of the UE 100 and the PHY layer of the base station 200 via a physical channel.

The MAC layer performs priority control of data, retransmission processing by hybrid ARQ (HARQ), random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size, and modulation and coding scheme (MCS)), and resources allocated to the UE 100.

The RLC layer transmits data to the RLC layer on the reception side using the features of the MAC layer and the PHY layer. Data and control information are transmitted between the RLC layer of the UE 100 and the RLC layer of the base station 200 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow to be a unit in which a core network performs quality of service (QoS) control, and a radio bearer to be a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. When an RRC connection exists between the RRC of the UE 100 and the RRC of the base station 200, the UE 100 is in an RRC connected state. When no RRC connection exists between the RRC of the UE 100 and the RRC of the base station 200, the UE 100 is in an RRC idle state. When the RRC connection between the RRC of the UE 100 and the RRC of the base station 200 is suspended, the UE 100 is in an RRC inactive state.

A NAS layer positioned above the RRC layer in the UE 100 performs session management and mobility management of the UE 100. NAS signaling is transmitted between the NAS layer of the UE 100 and the NAS layer of the core network apparatus 300.

Note that the UE 100 has an application layer and the like in addition to the protocol of the radio interface.

### (Radio Frame Configuration)

In the 5G system, downlink transmission and uplink transmission are configured in a radio frame of 10 ms duration. For example, the radio frame is expressed by a system frame number (SFN) of 0 to 1023. For example, the radio frame is configured with 10 subframes. For example, one subframe may be 1 ms. Also, one subframe may be configured with one or more slots. For example, the number of symbols configuring one slot is 14 for a normal cyclic prefix (CP) and 12 for an extended CP. Also, the number of slots configuring one subframe changes depending on a configured subcarrier spacing. For example, for the normal CP, in a case where the subcarrier spacing is configured as 15 kHz, the number of slots per subframe is one (that is, 14 symbols), in a case where the subcarrier spacing is configured as 30 kHz, the number of slots per subframe is two (that is, 28 symbols), in a case where the subcarrier spacing is configured as 60 kHz, the number of slots per subframe is four (that is, 56 symbols), and in a case where the subcarrier spacing is configured as 120 kHz, the number of slots per subframe is eight (that is, 128 symbols). For the extended CP, in a case where the subcarrier spacing is configured as 60 kHz, the number of slots per subframe is four (that is, 48 symbols). That is, the number of slots configuring one subframe is determined based on the subcarrier spacing configured by the base station 200. Also, the number of symbols configuring one subframe is determined based on the subcarrier spacing configured by the base station 200. That is, the number of symbols configuring the subframe of 1 ms is determined based on the subcarrier spacing configured by the base station 200, and the length (length in a time direction) of each symbol changes.

### (LTM)

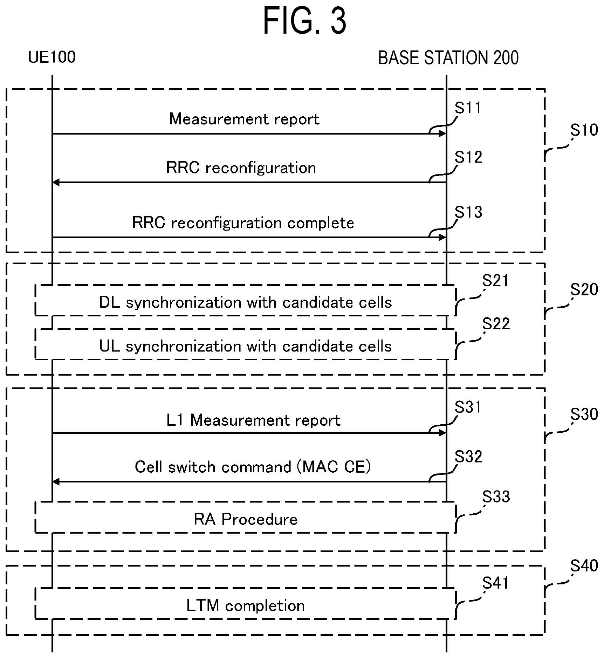

In the mobile communication system 1 conforming to the 3GPP technical specification, L1 (Layer 1)/L2 (Layer 2) triggered mobility (L1/L2-Triggered Mobility: LTM) is scheduled to be introduced. As illustrated in Fig 3, in the LTM, the following operations may be performed.

### Step S10: LTM preparation

The UE 100 in the RRC connected state may perform the following operation as the LTM preparation operation.

### Step S11:

The UE 100 transmits a measurement report message to the base station 200. The base station 200 determines to use the LTM and initiates candidate cell preparation.

### Step S12:

The base station 200 transmits an RRC reconfiguration (RRCReconfiguration) message including the LTM candidate cell configuration of one or more candidate cells.

### Step S13:

The UE 100 stores the LTM candidate cell configuration. The UE 100 transmits an RRC reconfiguration complete (RRCReconfigurationComplete) message to the base station 200.

### Step S20: Early Synchronization

The UE 100 may perform the following operation as the operation of the early synchronization.

### Step S21:

The UE 100 performs downlink (DL) synchronization with the candidate cell before receiving the cell switch command. The UE 100 may perform DL synchronization based on a synchronization signal (SS) and a physical broadcast channel (PBCH) block (SSB).

### Step S22:

The UE 100 performs timing advance (TA) acquisition before receiving the cell switch command. The UE 100 may perform the TA acquisition based on the PDCCH order (specifically, the PDCCH ordered RACH). The PDCCH order may be triggered only by the source cell.

### Step S30: LTM Execution

The UE 100 may perform the following operation as the operation of the LTM execution.

### Step S31:

The UE 100 performs the L1 measurement on the candidate cell configured by the LTM candidate cell configuration. The UL 100 transmits a lower-layer measurement report based on the L1 measurement to the base station 200.

### Step S32:

The base station 200 determines to perform cell switching to the target cell. The base station 200 transmits the MAC CE that triggers the cell switching by including the candidate configuration index of the target cell. The UE 100 switches the configuration of the target cell.

### Step S33:

When the cell switching needs to include performing a random access (RA) procedure, the UE 100 performs the RA procedure toward the target cell.

### Step S40: LTM Completion

The UE 100 may perform the following operation as the operation of the LTM completion.

### Step S41:

The UE 100 indicates that the completion of the cell switching to the target cell is successful.

Note that the UE 100 may perform steps S20 to S40 a plurality of times for subsequent LTM cell switching based on the configuration without releasing the configuration provided in step S12.

Meanwhile, in the LTM execution, it is agreed that both a method of performing a RA procedure between the UE 100 and the base station 200 (hereinafter, appropriately referred to as RACH-base LTM) and a method of performing an uplink transmission by the UE 100 without performing a RA procedure between the UE 100 and the base station 200 (hereinafter, appropriately referred to as a RACH-less LTM) are supported.

However, in a case where the UE 100 performs the RACH-base LTM, a random access channel (RACH) resource used in the RA procedure is not defined. Therefore, there is a concern that the UE 100 cannot appropriately perform the RACH-base LTM, and the cell switching to the target cell fails in the LTM. In an embodiment described below, an operation for enabling the RACH-base LTM to be appropriately performed is described.

### (Configuration of User Equipment)

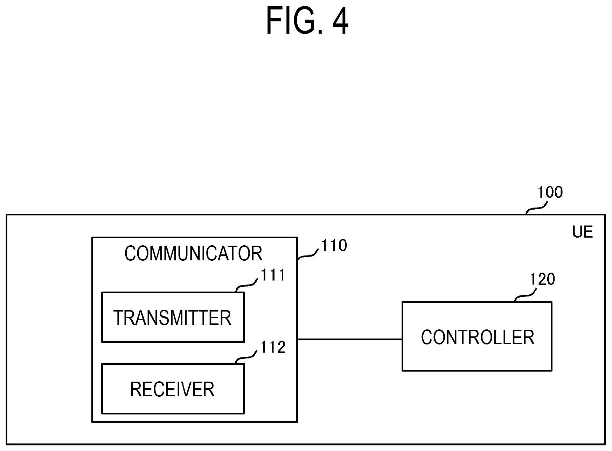

A configuration of the UE 100 according to the embodiment is described with reference to Fig. 4. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may be configured with a plurality of antennas and a radio frequency (RF) circuit. The antenna converts a signal into a radio wave and emits the radio wave into a space. Furthermore, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation controlled by the controller 120. The controller 120 may include at least one processor capable of executing a program and a memory that stores the program. The processor may perform the program and perform the operation of the controller 120. The controller 120 may include a digital signal processor that performs digital processing of a signal transmitted and received via the antenna and the RF circuit. The digital processing includes processing of the protocol stack of the RAN. Note that the memory stores the program to be performed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or a part of the memory may be included in the processor.

In the UE 100 having the above configuration, the receiver 112 receives the cell switch command for triggering the cell switching from the base station 200 by the MAC CE. The controller 120 performs the RA procedure between the UE 100 and the target cell based on the cell switch command. The controller 120 determines the RACH resource for the RA procedure according to a predefined rule or an instruction from the base station 200. As a result, since the base station 200 can clearly grasp the RACH resource used by the UE 100, the cell switching to the target cell in the LTM is likely to succeed as compared with the case where the RACH resource used by the UE 100 is unclear, and the RACH-base LTM is appropriately performed.

### (Configuration of Base Station)

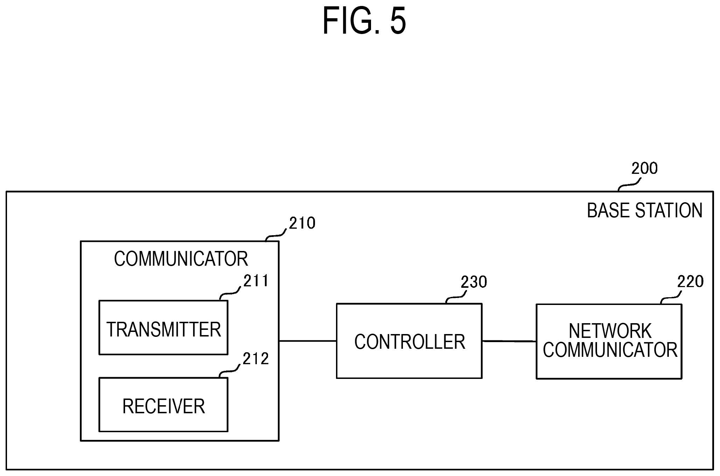

A configuration of the base station 200 according to the embodiment is described with reference to Fig. 5. The base station 200 includes a communicator 210, a network communicator 220, and a controller 230.

For example, the communicator 210 receives a radio signal from the UE 100 and transmits the radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from a network. The network communicator 220 receives, for example, a signal from a neighboring base station connected via the Xn interface that is an interface between base stations and transmits a signal to the neighboring base station. Also, the network communicator 220 receives a signal, for example, from the core network apparatus 300 connected via the NG interface and transmits the signal to the core network apparatus 300.

The controller 230 performs various types of control in the base station 200. The controller 230 controls, for example, communication with the UE 100 via the communicator 210. Also, the controller 230 controls, for example, communication with a node (for example, the neighboring base station or the core network apparatus 300) via the network communicator 220. The operation of the base station 200 described above and described below may be an operation controlled by the controller 230. The controller 230 may include at least one processor capable of executing a program and a memory that stores the program. The processor may perform the program and perform the operation of the controller 230. The controller 230 may include a digital signal processor that performs digital processing of a signal transmitted and received via the antenna and the RF circuit. The digital processing includes processing of the protocol stack of the RAN. Note that the memory stores the program to be performed by the processor, parameters related to the program, and data related to the program. All or a part of the memory may be included in the processor.

In the base station 200 having the above configuration, the transmitter 211 transmits the cell switch command for triggering the cell switching to the UE 100 by the MAC CE. The controller 230 performs the RA procedure between the UE 100 and the target cell based on the cell switch command. The controller 230 may perform control to instruct the UE 100 of the RACH resource for the RA procedure. As a result, since the base station 200 can clearly grasp the RACH resource used by the UE 100, the cell switching to the target cell in the LTM is likely to succeed as compared with the case where the RACH resource used by the UE 100 is unclear, and the RACH-base LTM is appropriately performed.

### (Operation Example)

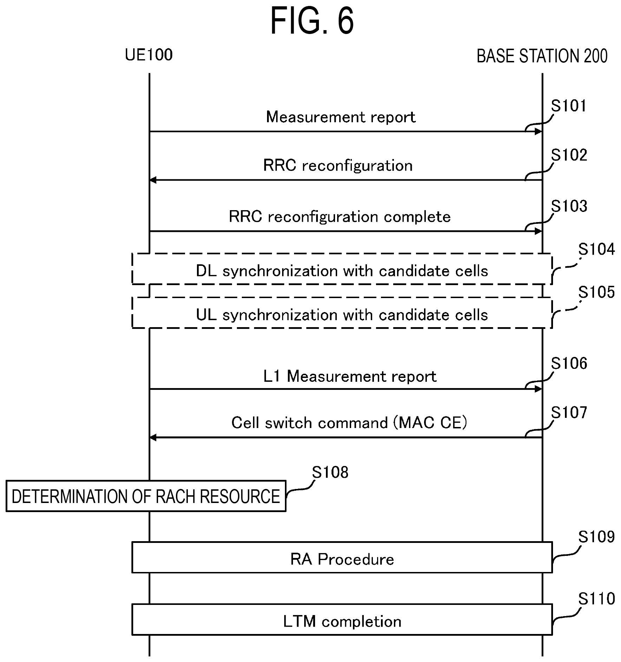

An operation example is described with reference to Figs. 6 to 9. Already provided description is omitted in some cases. The UE 100 is in an RRC connected state with a cell (a source cell) managed by the base station 200. Hereinafter, the UE 100 performs communication with the base station 200 in the source cell until the cell switching to the target cell is performed.

### Step S101:

The transmitter 111 of the UE 100 transmits a measurement report (message) to the base station 200. The receiver 212 of the base station 200 receives the measurement report from the UE 100.

The controller 230 of the base station 200 determines whether to use the LTM. For example, the controller 230 may determine whether to use the LTM based on the measurement report. When it is determined to use the LTM, the controller 230 initiates candidate cell preparation.

The controller 230 may choose the candidate cell of the target cell in the LTM as the candidate cell preparation based on the measurement report. For example, the controller 230 may choose a candidate cell from among cells managed by the base station 200. Furthermore, the controller 230 may generate configuration information (hereinafter, referred to as LTM configuration information) regarding the LTM. For example, the controller 230 may include the generated LTM configuration information in the RRC reconfiguration message. That is, the controller 230 may instruct the UE 100 to perform the LTM (operation related to the LTM) by including the LTM configuration information in the RRC reconfiguration message. When the LTM configuration information is included in the RRC reconfiguration message, the UE 100 may perform the LTM (operation related to LTM).

The controller 230 may include, in the LTM configuration information (for example, LTM-Config), for example, at least one of a list (hereinafter, referred to as an LTM candidate release list (for example, ltm-CandidateToReleaseList)) for releasing a candidate cell and a list (hereinafter, the LTM addition/modification list (for example, ltm-CandidateToAddModList)) for adding or modifying a candidate cell. The LTM addition/modification list may be a list configured with information of one or more candidate cells (for example, LTM-Candidate). The information of the candidate cell may include, for example, at least one of the following information.
· Identifier of candidate cell (for example, ltm-CandidateId)
· Configuration information related to candidate cell (for example, ltm-CandidateConfig)
·Information (for example, ltm-ConfigComplete) indicating whether the configuration information related to a candidate cell is a complete configuration or a delta-configuration
· Configuration information (for example, Itm-EarlyUlSyncConfig) for configuring information to be used for early synchronization
· Cell identifier (for example, ltm-NoResetID) in which L2 reset is not performed at the time of cell switching
· List for adding/modifying information to be used for early synchronization (for example, ltm-Candidate-Tci-States-ToAddModList)
· Identifier (for example, ltm-Candidate-Tci-States-ToReleaseList) for canceling (deleting) information used for early synchronization

The identifier of the candidate cell may be an identifier of the candidate cell configuration. Further, the configuration information (hereinafter, candidate cell configuration information) related to the candidate cell may include the RRC configuration configured in the UE 100. Further, the candidate cell configuration information may include cell group configuration information (for example, CellGroupConfig) including serving cell configuration information (for example, ServingCellConfig) and the like. Note that the candidate cell configuration information may correspond to the LTM candidate cell configuration included in the RRC reconfiguration message in step S12 described above.

The configuration information (hereinafter, early synchronization configuration information) for configuring information to be used for early synchronization may include second configuration information related to configuration of a RACH resource to be used for uplink synchronization with a candidate cell in early synchronization performed before reception of a cell switch command or may be second configuration information.

### Step S102:

The transmitter 211 of the base station 200 transmits the RRC reconfiguration message including the LTM configuration information to the UE 100. The receiver 112 of the UE 100 receives the RRC reconfiguration message from the base station 200. As a result, the receiver 112 of the UE 100 can receive the information of the candidate cell included in the LTM configuration information from the base station 200 by the RRC message. The controller 120 of the UE 100 stores the LTM configuration information.

### Step S103:

The transmitter 111 of the UE 100 transmits a RRC reconfiguration completion message to the base station 200. The receiver 212 of the base station 200 receives the RRC reconfiguration completion message from the UE 100.

### Step S104:

Downlink synchronization with each candidate cell may be performed as an operation of early synchronization. The controller 120 of the UE 100 performs downlink synchronization, for example, based on the SSB transmitted from each candidate cell.

### Step S105:

Uplink synchronization may be performed as an operation of early synchronization. For example, the transmitter 211 of the base station 200 may transmit a physical downlink control channel (PDCCH) order (that is, downlink control information (DCI)) for initiating the RA procedure for early synchronization to the UE 100 in each candidate cell configured for the UE 100 by the candidate cell configuration information. The receiver 112 of the UE 100 may receive the PDCCH order from the base station 200. Note that the PDCCH order in the early synchronization may be a PDCCH order (PDCCH ordered-RACH for TA Acquisition without RAR) used for acquiring the TA value without the RA response.

The controller 120 of the UE 100 may initiate the RA procedure based on the PDCCH order. The controller 120 may control the RA procedure based on the early synchronization configuration information.

The transmitter 111 of the UE 100 transmits the RA preamble (message 1) to the base station 200 on a physical random access channel (PRACH) in each candidate cell. The receiver 212 of the base station 200 receives the RA preamble from the UE 100 in each candidate cell.

The controller 230 of the UE 100 may use the RA preamble based on the early synchronization configuration information or may use the RA preamble based on the information included in the PDCCH order. For example, the controller 230 of the base station 200 may include the preamble index or may further include the SSB index in the PDCCH order. The preamble index indicates which RA preamble is to be used. The SSB index indicates an SSB used to determine a RACH opportunity for PRACH transmission. The controller 120 of the UE 100 may determine the RA preamble based on the preamble index (and the SSB index). For example, the controller 120 may use other information included in the PDCCH order and/or other information included in the early synchronization configuration information to transmit the RA preamble.

The controller 230 of the base station 200 calculates a timing advance (TA) value based on the RA preamble from the UE 100. The controller 230 may perform control to omit transmission of an RA response (that is, message 2) that is a response to the RA preamble.

### Step S106:

The transmitter 111 of the UE 100 performs the L1 measurement on each candidate cell configured by the candidate cell configuration information and then transmits the L1 measurement report to the base station 200. The receiver 212 of the base station 200 receives the L1 measurement report from the UE 100. The L1 measurement report is a measurement report of the lower layer based on the L1 measurement. The L1 measurement report is transmitted in a layer lower than the RRC layer. Note that the measurement report in step S101 is transmitted in the RRC layer.

The controller 230 of the base station 200 determines a target cell (that is, the LTM target cell) in the LTM based on the L1 measurement report. In addition, in the LTM execution, the controller 230 may determine whether to cause the UE 100 to perform a RACH-less LTM in which the UE 100 performs the uplink transmission without performing the RA procedure between the UE 100 and the base station 200 or to cause the UE 100 to perform a RACH-base LTM in which the RA procedure is performed between the UE 100 and the base station 200.

When the TA value in the target cell is calculated by performing the early synchronization, the controller 230 may determine to cause the UE 100 to perform the RACH-less LTM. The controller 230 may determine to cause the UE 100 to perform the RACH-less LTM in a case where setting a valid value as the TA value in the target cell to the MAC CE for transmitting a cell switch command to be described below. Meanwhile, in a case where the TA value in the target cell is not calculated, the controller 230 may determine to cause the UE 100 to perform the RACH-base LTM. When setting an invalid value as the TA value in the target cell to the MAC CE, the controller 230 may determine to cause the UE 100 to perform the RACH-base LTM. In the present operation example, the description proceeds on the assumption that the controller 230 determines to cause the UE 100 to perform the RACH-base LTM.

The controller 230 generates a MAC CE for transmitting a cell switch command. The MAC CE may be referred to as, for example, an LTM cell switch command MAC CE. The MAC CE may be referred to as a cell switch command (that is, may be a cell switch command). Hereinafter, the LTM cell switch command MAC CE may be appropriately referred to as a cell switch command. The cell switch command may include, for example, at least one piece of the following information (that is, field).

· Target Configuration Identifier (Target Configuration ID) indicating the index of the candidate target configuration to apply to the LTM cell switching
· Timing Advance Command indicating whether TA for LTM target cell is valid
· Identifier of TCI state (TCI state ID) indicating and activating a transmission configuration indication (TCI) state for LTM target cell
· Identifier of uplink TCI state (UL TCI state ID) indicating and activating uplink TCI state for LTM target cell
· Identifier of downlink bandwidth part (DL BWP ID) activated in LTM target cell
· Identifier of uplink bandwidth part (UL BWP ID) activated in LTM target cell

The target configuration identifier may be an identifier of a candidate cell to be a target cell that is a cell after the switching among the identifiers of the candidate cells included in the information of the candidate cell described above.

The timing advance command (field) may indicate whether TA (TA value) is valid for the target cell (for example, SpCell) corresponding to the target configuration (that is, the candidate cell configuration information) indicated by the target configuration identifier (field). When a designated value (for example, FFF) is set as the value of the field, the field may indicate that effective timing adjustment cannot be used for the primary timing advance group (PTAG) of the LTM target cell. In this case, the UE 100 needs to perform the RA procedure to the LTM target cell. That is, the UE 100 performs the RACH-base LTM. Meanwhile, in a case where a value other than the designated value (for example, FFF) is set as the value of the field, the field indicates an index value (that is, the TA value) used to control the amount of timing adjustment to be applied by the MAC entity of the UE 100. That is, the timing advance command (field) indicates that the RA procedure of the LTM cell switching can be skipped. In this case, the UE 100 performs the RACH-less LTM. Here, the designated value is defined in advance by a specification or the like and may be a value known between the base station 200 and the UE 100.

In the present operation example, the description proceeds on the assumption that the controller 230 of the base station 200 sets a designated value indicating that the TA value is invalid in the timing advance command.

### Step S107:

The transmitter 211 of the base station 200 transmits the cell switch command to the UE 100 by the MAC CE. The receiver 112 of the UE 100 receives the cell switch command from the base station 200 by the MAC CE.

The controller 120 of the UE 100 switches the configuration of the target cell based on the identifier (that is, the target configuration identifier) of the candidate cell included in the cell switch command (MAC CE). For example, the controller 120 applies the candidate cell configuration information associated with the identifier of the candidate cell that is the same as the target configuration identifier included in the cell switch command (MAC CE).

The controller 120 determines whether to perform the RACH-base LTM or to perform the RACH-less LTM based on the value included in the timing advance command. When a designated value (for example, FFF) is set in the timing advance command, the controller 120 determines to perform the RACH-base LTM. Meanwhile, in a case where a value other than a designated value (for example, FFF) is set in the timing advance command, the controller 120 determines to perform the RACH-less LTM. In the present operation example, the description proceeds on the assumption that the controller 120 determines to perform the RACH-base LTM.

### Step S108:

The controller 120 of the UE 100 determines a random access channel (RACH) resource for the RA procedure. The controller 120 determines the RACH resource according to a predefined rule or an instruction from the base station 200.

When the second configuration information related to the configuration of the RACH resource used for uplink synchronization with the candidate cell in the early synchronization is included in the information of the candidate cell, the controller 120 may determine one of the first RACH resource configured by the candidate cell configuration information (hereinafter, may be referred to as first configuration information) related to the configuration of the candidate cell and the second RACH resource configured by the second configuration information as the RACH resource. The controller 120 can determine the RACH resource, for example, by any one of the following methods.

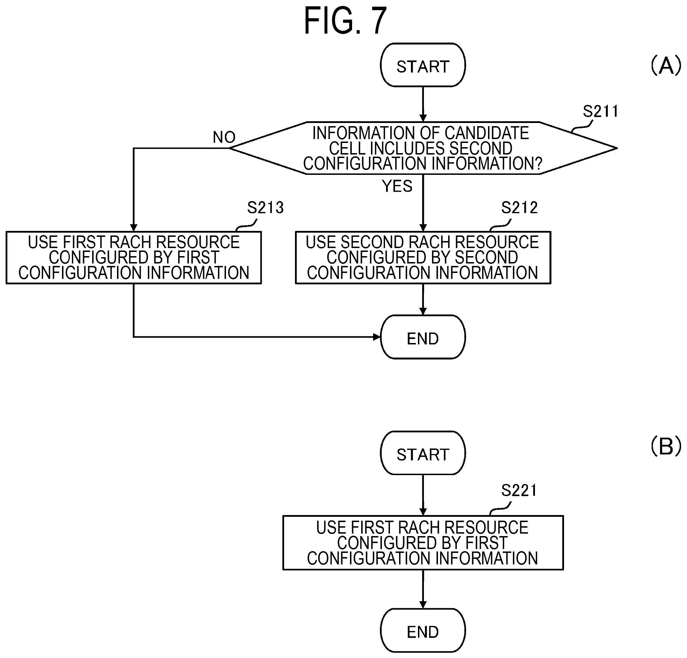

In the first method, the UE 100 preferentially determines the second RACH resource as the RACH resource over the first RACH resource according to a predefined rule. For example, as illustrated in Fig. 7A, the controller 120 may perform the following operation. Fig. 7A is a flowchart illustrating the first method for determining a RACH resource.

### Step S211:

The controller 120 determines whether the information of the candidate cell includes the second configuration information. In a case where the information of the candidate cell includes the second configuration information, the controller 120 performs the processing of step S212. Meanwhile, in a case where the information of the candidate cell does not include the second configuration information, the controller 120 performs the processing of step S213.

Note that the controller 120 may determine whether or not the second RACH resource is configured by the second configuration information. When the second RACH resource is configured, the controller 120 may perform the processing of step S212. Meanwhile, in a case where the second RACH resource is not configured, the controller 120 performs the processing of step S213.

### Step S212:

The controller 120 uses the second RACH resource configured by the second configuration information. Therefore, in a case where the second configuration information is included in the information of the candidate cell, the controller 120 determines the second RACH resource as the RACH resource.

### Step S213:

The controller 120 uses the first RACH resource configured by the first configuration information. Therefore, in a case where the second configuration information is not included in the information of the candidate cell, the controller 120 determines the first RACH resource as the RACH resource.

In the second method, the UE 100 determines the first RACH resource as the RACH resource according to a predefined rule. For example, as illustrated in Fig. 7B, the controller 120 may perform the following operation. Fig. 7B is a flowchart illustrating the second method for determining the RACH resource.

### Step S221:

The controller 120 uses the first RACH resource configured by the first configuration information. Therefore, regardless of whether the second configuration information is included in the information of the candidate cell, the controller 120 determines the first RACH resource as the RACH resource.

In a third method, the UE 100 determines a RACH resource according to an instruction from the base station 200. The controller 230 of the base station 200 performs control to instruct the UE 100 of the RACH resource. The controller 230 may control the transmitter 211 to transmit the instruction information to the UE 100.

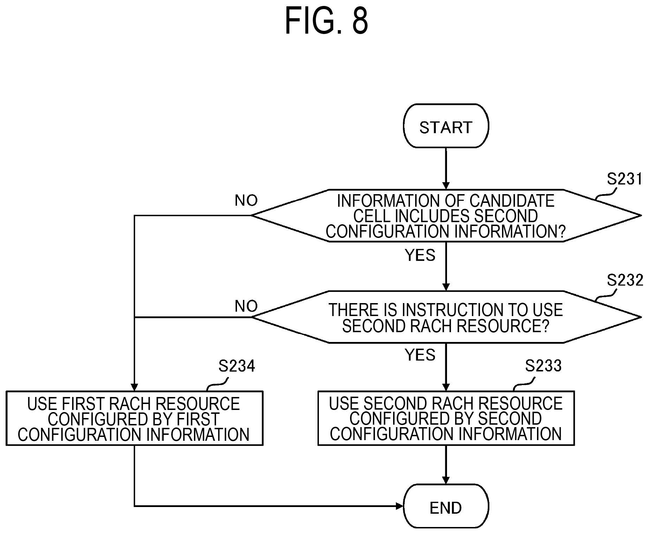

As illustrated in Fig. 8, the controller 120 of the UE 100 may perform the following operation.

### Step S231:

In the same manner as in step S211, the controller 120 determines whether the information of the candidate cell includes the second configuration information. When the information of the candidate cell includes the second configuration information, the controller 120 performs the processing of step S232. Meanwhile, in a case where the information of the candidate cell does not include the second configuration information, the controller 120 performs the processing of step S234.

### Step S232:

The controller 120 determines whether there is an instruction to use the second RACH resource. When the receiver 112 has received, from the base station 200, information (hereinafter, appropriately referred to as instruction information) instructing use of either the first RACH resource or the second RACH resource as the RACH resource for the RA procedure, the controller 120 determines whether there is an instruction to use the second RACH resource based on the instruction information.

For example, in a case where use of the second RACH resource is instructed by the instruction information, the controller 120 determines that there is the instruction to use the second RACH resource. Meanwhile, in a case where use of the first RACH resource is instructed by the instruction information, the controller 120 determines that there is not the instruction to use the second RACH resource. Also, in a case where the instruction information is not received from the base station 200, the controller 120 determines that there is no instruction to use the second RACH resource.

Note that the instruction information may be included in the RRC message. The instruction information may be information common to each candidate cell configured in the UE 100 as a candidate for the target cell. Therefore, the instruction information may be commonly configured for each candidate cell. For example, the controller 230 of the base station 200 may include the instruction information in a field arranged in parallel with a field in which the LTM candidate release list in the LTM configuration information is set, instead of each candidate cell configuration information.

The instruction information may be information dedicated to each candidate cell configured in the UE 100 as a candidate for the target cell. Therefore, the instruction information may be individually configured for each candidate cell. For example, the controller 230 of the base station 200 may include the instruction information in each piece of first configuration information or may include the instruction information in each piece of second configuration information. When the instruction information is included in each piece of the first configuration information and the second configuration information, the controller 120 may prioritize, for example, the second configuration information. Otherwise, in a case where the instruction information is included in each piece of the first configuration information and the second configuration information, the controller 120 may prioritize, for example, the first configuration information. The controller 120 may ignore instruction information that is not prioritized.

Further, the instruction information may be included in the cell switch command. When the instruction information is included in both the cell switch command and the RRC message, the controller 120 may determine the RACH resource instructed by the instruction information included in the cell switch command as the RACH resource. Therefore, the instruction information included in the cell switch command may be prioritized over the instruction information included in each (or one) piece of the first configuration information and the second configuration information. In this case, the controller 120 may ignore the instruction information included in each (or one) piece of the first configuration information and the second configuration information.

When use of the second RACH resource is instructed by the prioritized instruction information, the controller 120 determines that there is the instruction to use the second RACH resource. Otherwise, the controller 120 determines that there is not an instruction to use the second RACH resource.

### Step S233:

In the same manner as in step S212, the controller 120 uses the second RACH resource configured by the second configuration information. Therefore, the controller 120 determines the second RACH resource as the RACH resource.

### Step S234:

In the same manner as in step S213, the controller 120 uses the first RACH resource configured by the first configuration information. Therefore, the controller 120 determines the first RACH resource as the RACH resource.

As described above, after determining the RACH resource to be used, the controller 120 performs the following processing. Note that the controller 120 performs the following processing in the RA procedure.

### Step S109:

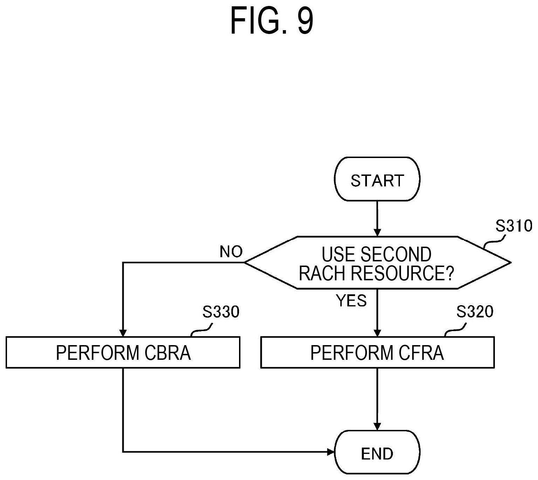

The controller 120 of the UE 100 performs the RA procedure based on the cell switch command. The controller 120 may determine whether to perform contention free random access (CFRA) or contention based random access (CBRA) as the RA procedure based on the RACH resource to be used. For example, as illustrated in Fig. 9, the controller 120 may be perform determination as follows.

### Step S310:

The controller 120 determines whether to use the second RACH resource. When using the second RACH resource, the controller 120 performs the processing of step S320. Meanwhile, the controller 120 determines whether to use the first RACH resource. When using the first RACH resource, the controller 120 performs the processing of step S320.

### Step S320:

The controller 120 performs CFRA. Therefore, in a case where determining the second RACH resource as the RACH resource, the controller 120 performs CFRA as the RA procedure.

When the CFRA is performed, in addition to the second RACH resource configured by the second configuration information, the controller 120 may use a resource configured (or allocated) by the following information as a RACH resource.

First, in a case where the PDCCH order for the candidate cell corresponding to the target cell is received in the early synchronization, the controller 120 may determine the RACH resource by using information included in the PDCCH order. For example, in a case where the CFRA is performed as the RA procedure, the controller 120 may use the RA preamble determined based on the preamble index included in the PDCCH order in the early synchronization as the RACH resource.

Furthermore, in a case where the PDCCH order further includes the SSB index, the controller 120 may determine the RA preamble based on the SSB index in addition to the preamble index. The controller 120 may determine the RA preamble based on the measurement result of the SSB indicated by the SSB index.

Furthermore, the controller 120 may use other information (for example, an uplink/supplementary uplink indicator (UL/SUL indicator) indicating an uplink carrier in a cell transmitting a PRACH, and a PRACH mask index indicating a RACH opportunity associated with an SSB indicated by the SSB index) included in the PDCCH order to determine the RACH resource. Alternatively, the controller 120 may ignore other information included in the PDCCH order.

Secondly, the controller 120 may determine the RACH resource by using information included in the cell switch command. For example, in a case where the CFRA is performed as the RA procedure, the controller 120 may use the RA preamble determined based on the preamble index included in the cell switch command as the RACH resource. Therefore, the controller 230 of the base station 200 may include the preamble index in the cell switch command.

Furthermore, in a case where the cell switch command further includes the SSB index, the controller 120 may determine the RA preamble based on the SSB index in addition to the preamble index. Therefore, the controller 230 of the base station 200 may include the SSB index in the cell switch command.

In addition, the controller 120 may use other information (for example, an uplink/supplementary uplink indicator (UL/SUL indicator), and a PRACH mask index) included in the cell switch command to determine the RACH resource.

The controller 120 may prioritize one of the information included in the PDCCH order and the information included in the cell switch command. For example, the controller 120 may determine the RA preamble by using the preamble index included in the cell switch command without using the preamble index included in the PDCCH order. For example, in a case where the cell switch command does not include the preamble index, the controller 120 may determine the RA preamble by using the preamble index included in the PDCCH order. In addition, for example, even in a case where the RACH resource is determined using information included in the cell switch command, the controller 120 may determine the RACH resource using information not included in the cell switch command but included in the PDCCH order. Otherwise, the controller 120 may prioritize the information included in the PDCCH order over the information included in the cell switch command.

In addition, the controller 120 may prioritize the information included in the cell switch command over the information configured by the second configuration information. In addition, the controller 120 may prioritize the information included in the PDCCH order over the information configured by the second configuration information. Since the controller 120 can use the latest information received after the RRC message, the RA procedure can be appropriately performed.

The transmitter 111 of the UE 100 transmits the RA preamble to the base station 200 (target cell) using the determined RACH resource. The receiver 212 of the base station 200 receives the RA preamble from the UE 100 in the target cell.

Thereafter, the transmitter 211 of the base station 200 transmits the RA response to the UE 100 in the target cell. The receiver 112 of the UE 100 receives the RA response from the base station 200 (target cell).

### Step S330:

The controller 120 performs CBRA. Therefore, in a case where determining the first RACH resource as the RACH resource, the controller 120 performs CBRA as the RA procedure.

The controller 120 uses the first RACH resource configured in the first configuration information associated with the candidate cell corresponding to the target cell. For example, the controller 120 uses the RA preamble determined based on the preamble index included in the first configuration information as the RACH resource.

The controller 120 of the UE 100 may perform the 4-step RA type CBRA or may perform the 2-step RA type CBRA.

The controller 120 of the UE 100 transmits the RA preamble to the base station 200 (target cell) using the determined RACH resource. The receiver 212 of the base station 200 receives the RA preamble from the UE 100 in the target cell.

The transmitter 211 of the base station 200 transmits the RA response (that is, message 2) to the UE 100 in the target cell. The receiver 112 of the UE 100 receives the RA response from the base station 200 (target cell). Alternatively, the transmitter 211 of the base station 200 transmits a contention resolution (that is, message B) to the UE 100 in the target cell. The receiver 112 of the UE 100 receives the message B from the base station 200 (target cell).

When the RA response is received, the transmitter 111 of the UE 100 transmits scheduled transmission (that is, message 3) to the base station 200. The receiver 212 of the base station 200 receives the message 3 from the UE 100 in the target cell.

When receiving the message 3, the transmitter 211 of the base station 200 transmits a contention resolution (that is, message 4) to the UE 100 in the target cell. The receiver 112 of the UE 100 receives the message 4 from the base station 200 (target cell).

### Step S110:

The controller 120 of the UE 100 considers that the LTM execution is normally completed in a case where the RACH is normally completed, that is, the RA procedure is successful. Accordingly, LTM completion is performed.

In the CFRA, the controller 230 of the base station 200 considers that the LTM execution is normally completed based on the reception of the RA preamble in the target cell. In the CBRA, the controller 230 considers that the LTM execution is normally completed based on the reception of the message 3 or the message B in the target cell. Accordingly, LTM completion is performed.

As described above, the receiver 112 of the UE 100 receives the cell switch command for triggering the cell switching from the base station 200 by the MAC CE. The controller 120 performs the RA procedure between the UE 100 and the target cell based on the cell switch command. The controller 120 determines the RACH resource for the RA procedure according to a predefined rule or an instruction from the base station 200. As a result, since the base station 200 can clearly grasp the RACH resource used by the UE 100, the cell switching to the target cell in the LTM is likely to succeed as compared with the case where the RACH resource used by the UE 100 is unclear, and the RACH-base LTM is appropriately performed.

In addition, the receiver 112 may receive information of a candidate cell that is a candidate for the target cell from the base station 200 by the RRC message. The information of the candidate cell may include the first configuration information related to configuration of the candidate cell. When the second configuration information related to the configuration of the RACH resource used for uplink synchronization with the candidate cell in the early synchronization performed before reception of the cell switch command is included in the information of the candidate cell, the controller 120 may determine one of the first RACH resource configured by the first configuration information and the second RACH resource configured by the second configuration information as the RACH resource. Accordingly, since the UE 100 uses any one of the first RACH resource and the second RACH resource as the RACH resource, the base station 200 can clearly grasp the RACH resource used by the UE 100.

Here, in a case where two RACH resources of the first RACH resource and the second RACH resource can be configured in the UE 100, it is not clear which resource should be used as the RACH resource at present in the RACH-base LTM. Therefore, the UE 100 can determine the RACH resource as follows.

When the second configuration information is included in the information of the candidate cell, the controller 120 determines the second RACH resource as the RACH resource. Therefore, since it is known that the UE 100 and the base station 200 use the second RACH resource out of the first RACH resource and the second RACH resource, the RACH-base LTM can be appropriately performed.

Also, in a case where the second configuration information is not included in the information of the candidate cell, the controller 120 determines the first RACH resource as the RACH resource. Therefore, since it is known that the UE 100 and the base station 200 use the first RACH resource, the RACH-base LTM can be appropriately performed.

Also, regardless of whether the second configuration information is included in the information of the candidate cell, the controller 120 determines the first RACH resource as the RACH resource. As a result, even if the second RACH resource is configured, it is known that the UE 100 uses the first RACH resource, so that the RACH-base LTM can be appropriately performed.

In addition, the receiver 112 may receive, from the base station 200, instruction information for instructing use of one of the first RACH resource and the second RACH resource as the RACH resource for the RA procedure. As a result, the RACH resource used by the base station 200 can be controlled.

Also, the instruction information may be included in the RRC message. As a result, since the RRC message has a larger amount of information than the lower layer, it is possible to flexibly instruct the RACH resource to be used.

Further, the instruction information may be included in the cell switch command. Since the cell switch command is received immediately before the cell switching, for example, the base station 200 can be instructed to use a valid RACH resource. As a result, the RA procedure can be appropriately performed.

Also, in a case where the instruction information is included in both the cell switch command and the RRC message, the controller 120 may determine the RACH resource instructed by the instruction information included in the cell switch command as the RACH resource. As a result, the UE 100 can use the valid RACH resource determined immediately before the cell switching.

Also, in a case where determining the second RACH resource as the RACH resource, the controller 120 may perform CFRA as the RA procedure. Also, in a case where determining the first RACH resource as the RACH resource, the controller 120 may perform CBRA as the RA procedure. Since the second RACH resource is information related to the configuration of the RACH resource used for uplink synchronization with the candidate cell in early synchronization, the second RACH resource may include information usable for the CFRA. Therefore, the controller 120 can appropriately perform the RACH-base LTM by performing the CFRA using the information usable for the CFRA.

Furthermore, the receiver 112 may receive the PDCCH order from the base station 200 in the early synchronization. When the CFRA is performed as the RA procedure, the controller 120 may use the RA preamble determined based on the preamble index included in the PDCCH order as the RACH resource. As a result, the contention-free RA preamble can be determined by the preamble index included in the PDCCH order. As a result, the RA procedure is likely to be successful, and the cell switching to the target cell is likely to be successful in the LTM.

In addition, in a case where the CFRA is performed as the RA procedure, the controller 120 may use the RA preamble determined based on the preamble index included in the cell switch command as the RACH resource. As a result, the UE 100 can use the valid preamble index determined immediately before the cell switching.

In addition, in a case where the CBRA is performed as the RA procedure, the controller 120 may use the RA preamble determined based on the preamble index included in the first configuration information as the RACH resource. As a result, the UE 100 can determine the RA preamble based on the preamble index allocated in advance by the candidate cell configuration information related to the configuration of the candidate cell, and the RACH-base LTM can be appropriately performed.

Also, the transmitter 211 of the base station 200 transmits the cell switch command for triggering the cell switching to the UE 100 by the MAC CE. The controller 230 performs the RA procedure between the UE 100 and the target cell based on the cell switch command. The controller 230 may perform control to instruct the UE 100 of the RACH resource for the RA procedure. As a result, since the base station 200 can clearly grasp the RACH resource used by the UE 100, the cell switching to the target cell in the LTM is likely to succeed as compared with the case where the RACH resource used by the UE 100 is unclear, and the RACH-base LTM is appropriately performed.

### (Other Embodiments)

In the above-described embodiment, the UE 100 may use the first RACH resource configured by the first configuration information (that is, the candidate cell configuration information) in the CFRA.

In the foregoing embodiment, the UE 100 may determine the RACH resource according to a predefined rule until receiving the instruction information from the base station 200. When receiving the instruction information, the UE 100 may determine the RACH resource according to the instruction from the base station 200.

In the above-described embodiment, the mobile communication system based on the NR is described as the example of the mobile communication system 1. However, the mobile communication system 1 is not limited to the example. The mobile communication system 1 may be a system conforming to a TS of LTE (Long Term Evolution) or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard. The base station 200 may be an integrated access and backhaul (IAB) donor or an IAB node.

In the above-described embodiment, the mobile communication system based on the NR is described as the example of the mobile communication system 1. However, the mobile communication system 1 is not limited to the example. The mobile communication system 1 may be a system conforming to a TS of LTE or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard.

The steps in the operation of the above-described embodiment are not necessarily performed in the chronological order according to the order described in the flowchart or the sequence diagram. For example, the steps in the operation may be performed in an order different from the order described in the flowchart or the sequence diagram or may be performed in parallel. Also, a part of the steps in the operation may be deleted, or additional steps may be added to the processing. Further, each operation flow described above is not limited to a case of being necessarily implemented separately and independently, and two or more operation flows can be implemented in combination. For example, a part of steps of one operation flow may be added to another operation flow, or a part of steps of one operation flow may be replaced with a part of steps of another operation flow.

A program for causing a computer to perform each of the processes performed by the UE 100 or the base station 200 may be provided. The program may be recorded in a computer-readable medium. The program can be installed in the computer using the computer-readable medium. Here, the computer-readable medium in which the program is recorded may be a non-transitory recording medium. The non-transitory recording medium is not particularly limited and may be, for example, a recording medium such as a compact disk read only memory (CD-ROM) or a digital versatile disc read only memory (DVD-ROM). Also, circuits that perform the processes performed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean performing processing of at least one layer in the protocol stack used for transmission or may mean physically transmitting a signal in a wireless or wired manner.
Alternatively, the term "transmit" may mean a combination of executing the processing of at least one layer and physically transmitting the signal in a wireless or wired manner as described above. Similarly, the term "receive" may mean executing processing of at least one layer in a protocol stack used for reception or may mean physically receiving a signal in a wireless or wired manner. Alternatively, the term "receive" may mean a combination of executing the processing of at least one layer and physically receiving the signal in a wireless or wired manner as described above. Similarly, the term "obtain/acquire" may mean obtaining/acquiring information from stored information, may mean obtaining/acquiring information from information received from another node, or may mean obtaining/acquiring information by generating information. Similarly, the terms "based on" and "depending on/in response to" do not mean "based only on" or "depending only on/in response only to" unless explicitly stated otherwise. The term "based on" means both "based only on" and "at least partially based on". Similarly, the term "depending on/in response to" means both "depending only on/in response only to" and "at least partially depending on/at least partially in response to". Similarly, the terms "include" and "comprise" do not mean including only enumerated items but mean both of including only enumerated items and including more items in addition to the enumerated items. Similarly, in the present disclosure, the term "or" does not mean exclusive OR, and means OR. Further, any reference to elements using designations such as "first", "second", and the like used in the present disclosure does not generally limit the amount or the order of the elements. Such designations may be used in the present disclosure as a convenient method to distinguish between two or more elements. References to first and second elements do not mean that only two elements can be employed therein or that the first element should precede the second element in any form. In the present disclosure, for example, in a case where articles such as "a", "an", and "the" in English are added by translation, such articles cover the plural meaning unless the context clearly indicates otherwise.

Although the present disclosure has been described according to examples, it is understood that the present disclosure is not limited to the examples or structures. The present disclosure also includes various modified examples or modifications made within an equivalent range. Additionally, various combinations or modes, or other combinations or modes including only one element, more elements, or less elements also fall within the scope and spirit of the present disclosure.

### (Supplementary Notes)

Features related to the above-described embodiments are additionally described.

### (Supplementary Note 1)

A communication apparatus comprising:
a receiver configured to receive a cell switch command that triggers cell switching from a base station by a medium access control (MAC) control element (CE); and
a controller configured to perform a random access (RA) procedure between the communication apparatus and a target cell based on the cell switch command,
in which the controller is configured to determine a random access channel (RACH) resource for the RA procedure according to a predefined rule or an instruction from the base station.

### (Supplementary Note 2)

A communication apparatus according to supplementary note 1,
in which the receiver is configured to receive information of a candidate cell that is a candidate for the target cell from the base station by a radio resource control (RRC) message,
the information of the candidate cell includes first configuration information related to configuration of the candidate cell,
in a case where second configuration information related to a configuration of the RACH resource used for uplink synchronization with the candidate cell in early synchronization performed before reception of the cell switch command is included in information of the candidate cell, the controller is configured to determine any one of a first RACH resource configured by the first configuration information and a second RACH resource configured by the second configuration information as the RACH resource.

### (Supplementary Note 3)

The communication apparatus according to supplementary note 2,
in which the controller is configured to determine the second RACH resource as the RACH resource in a case where the second configuration information is included in the information of the candidate cell.

### (Supplementary Note 4)

The communication apparatus according to supplementary note 2 or 3,
in which the controller is configured to determine the first RACH resource as the RACH resource in a case where the second configuration information is not included in the information of the candidate cell.

### (Supplementary Note 5)

The communication apparatus according to supplementary note 2,
in which the controller is configured to determine the first RACH resource as the RACH resource regardless of whether the second configuration information is included in the information of the candidate cell.

### (Supplementary Note 6)

The communication apparatus according to any one of supplementary notes 2 to 5,
in which the receiver is configured to receive, from the base station, instruction information for instructing to use any one of the first RACH resource and the second RACH resource as the RACH resource for the RA procedure.

### (Supplementary Note 7)

The communication apparatus according to supplementary note 6,
in which the instruction information is included in the RRC message.

### (Supplementary Note 8)

The communication apparatus according to supplementary note 6 or 7,
in which the instruction information is included in the cell switch command.

### (Supplementary Note 9)

The communication apparatus according to supplementary note 8,
in which, in a case where the instruction information is included in both the cell switch command and the RRC message, the controller is configured to determine a RACH resource instructed by the instruction information included in the cell switch command as the RACH resource.

### (Supplementary Note 10)

The communication apparatus according to any one of supplementary notes 2 to 9,
in which the controller is configured to
perform contention free random access (CFRA) as the RA procedure in a case where the second RACH resource is determined as the RACH resource, and
perform contention based random access (CBRA) as the RA procedure in a case where the first RACH resource is determined as the RACH resource.

### (Supplementary Note 11)

The communication apparatus according to supplementary note 10,
in which the receiver is configured to receive a physical downlink control channel (PDCCH) order from the base station in the early synchronization, and
the controller is configured to use an RA preamble determined based on a preamble index included in the PDCCH order as the RACH resource in a case where the CFRA is performed as the RA procedure.

### (Supplementary Note 12)

The communication apparatus according to supplementary note 10 or 11,
in which the controller is configured to use the RA preamble determined based on the preamble index included in the cell switch command as the RACH resource, in a case where the CFRA is performed as the RA procedure.

### (Supplementary Note 13)

The communication apparatus according to any one of supplementary notes 10 to 12,
in which the controller is configured to use the RA preamble determined based on the preamble index included in the first configuration information as the RACH resource, in a case where the CBRA is performed as the RA procedure.

### (Supplementary Note 14)

A base station, comprising:
a transmitter configured to transmit a cell switch command that triggers cell switching to a communication apparatus by a medium access control (MAC) control element (CE); and
a controller configured to perform a random access (RA) procedure between the communication apparatus and a target cell based on the cell switch command,
in which the controller is configured to perform control to instruct the communication apparatus of the random access channel (RACH) resource for the RA procedure.

### (Supplementary Note 15)

A communication method performed by a communication apparatus, the method comprising the steps of:
receiving a cell switch command that triggers cell switching from a base station by a medium access control (MAC) control element (CE); and
performing a random access (RA) procedure between the communication apparatus and a target cell based on the cell switch command,
in which the step of performing the RA procedure includes determining a random access channel (RACH) resource for the RA procedure according to a predefined rule or an instruction from the base station.

### (Supplementary Note 16)

A communication apparatus comprising:
a receiver configured to receive configuration information related to Layer 1/Layer 2 triggered mobility (LTM), the configuration information including first information indicating a preamble index used for a random access (RA) procedure from a base station using a radio resource control (RRC) message and receive a cell switch command medium access control (MAC) control element (CE) including information for identifying the configuration information and instructing cell switching from the base station; and
a controller configured to perform the RA procedure to a target cell corresponding to the information for identifying the configuration information, in a case where the cell switch command MAC CE is received,
in which, in a case where second information indicating the preamble index is included in the cell switch command MAC CE, the controller is configured to perform the RA procedure using the preamble index determined based on the second information.

### (Supplementary Note 17)

The communication apparatus according to supplementary note 16,
in which, in a case where third information indicating an SSB index is included in the cell switch command MAC CE, the controller is configured to perform the RA procedure by using the SSB index determined based on the third information.

### (Supplementary Note 18)

The communication apparatus according to supplementary note 17,
in which the cell switch command MAC CE includes the second information and fourth information indicating use of the third information.

### (Supplementary Note 19)

The communication apparatus according to any one of supplementary notes 16 to 18,
in which a designated value is set in a target configuration identifier included in the cell switch command MAC CE.

### (Supplementary Note 20)

A base station comprising:
a transmitter configured to transmit configuration information related to Layer 1/Layer 2 triggered mobility (LTM), the configuration information including first information indicating a preamble index used in a random access (RA) procedure, to a communication apparatus by using a radio resource control (RRC) message and transmit, to the communication apparatus, cell switch command medium access control (MAC) control element (CE) including information for identifying the configuration information and instructing cell switching; and
a controller configured to include second information indicating the preamble index in the cell switch command MAC CE.

### (Supplementary Note 21)

A communication method performed by a communication apparatus, the method comprising the steps of:
receiving configuration information related to Layer 1/Layer 2 triggered mobility (LTM), the configuration information including first information indicating a preamble index used for a random access (RA) procedure from a base station using a radio resource control (RRC) message;
receiving a cell switch command medium access control (MAC) control element (CE) including information for identifying the configuration information and instructing cell switching from the base station;
performing the RA procedure to a target cell corresponding to the information for identifying the configuration information, in a case where the cell switch command MAC CE is received; and
performing the RA procedure using the preamble index determined based on second information, in a case where the second information indicating the preamble index is included in the cell switch command MAC CE.

## Claims

1. A communication apparatus (100) comprising:
a receiver (112) configured to receive configuration information related to Layer 1/Layer 2 triggered mobility (LTM), the configuration information including first information indicating a preamble index used for a random access (RA) procedure from a base station using a radio resource control (RRC) message and receive a cell switch command medium access control (MAC) control element (CE) including information for identifying the configuration information and instructing cell switching from the base station; and
a controller (120) configured to perform the RA procedure to a target cell corresponding to the information for identifying the configuration information, in a case where the cell switch command MAC CE is received,
wherein, in a case where second information indicating the preamble index is included in the cell switch command MAC CE, the controller is configured to perform the RA procedure using the preamble index determined based on the second information.

2. The communication apparatus according to claim 1,
wherein, in a case where third information indicating an SSB index is included in the cell switch command MAC CE, the controller is configured to perform the RA procedure by using the SSB index determined based on the third information.

3. The communication apparatus according to claim 2,
wherein the cell switch command MAC CE includes the second information and fourth information indicating use of the third information.

4. The communication apparatus according to claim 3,
wherein a designated value is set in a target configuration identifier included in the cell switch command MAC CE.

5. A base station (200) comprising:
a transmitter (211) configured to transmit configuration information related to Layer 1/Layer 2 triggered mobility (LTM), the configuration information including first information indicating a preamble index used in a random access (RA) procedure, to a communication apparatus by using a radio resource control (RRC) message and transmit, to the communication apparatus, cell switch command medium access control (MAC) control element (CE) including information for identifying the configuration information and instructing cell switching; and
a controller (230) configured to include second information indicating the preamble index in the cell switch command MAC CE.

6. A communication method performed by a communication apparatus (100), the communication method comprising the steps of:
receiving configuration information related to Layer 1/Layer 2 triggered mobility (LTM), the configuration information including first information indicating a preamble index used for a random access (RA) procedure from a base station (200) using a radio resource control (RRC) message;
receiving a cell switch command medium access control (MAC) control element (CE) including information for identifying the configuration information and instructing cell switching from the base station;
performing the RA procedure to a target cell corresponding to the information for identifying the configuration information, in a case where the cell switch command MAC CE is received; and
performing the RA procedure using the preamble index determined based on second information, in a case where the second information indicating the preamble index is included in the cell switch command MAC CE.
